# EUROPÄISCHE PATENTANMELDUNG

(11) **EP 4 052 900 A1**
(43) Veröffentlichungstag der Anmeldung: **07.09.2022**
(21) Anmeldenummer: 21159826.3
(22) Anmeldetag: 01.03.2021
(51) Int. Cl.: B32B 17/06, C09K 21/14, E06B 5/16, C09D 133/26

(54) **POLYMERISIERBARE ZUSAMMENSETZUNG ZUR HERSTELLUNG EINES POLYACRYLAMID-HYDROGELS FÜR EINE BRANDSCHUTZVERGLASUNG, ENTSPRECHENDE HERSTELLUNGSVERFAHREN UND VERWENDUNGEN**

(71) Anmelder: Skanbel UG, 27755 Delmenhorst (DE)
(72) Erfinder: WEGMANN, Hermann, 26871 Aschendorf (DE); ROSS, Heinz-Hermann, 26906 Dersum (DE)
(74) Vertreter: Eisenführ Speiser

(57) **Zusammenfassung**

Beschrieben wird eine polymerisierbare Zusammensetzung zur Herstellung eines Polyacrylamid-Hydrogels, ein entsprechendes Polyacrylamid-Hydrogel sowie eine Brandschutzverglasung umfassend eine vorgenannte polymerisierbare Zusammensetzung oder ein vorgenanntes Polyacrylamid-Hydrogel. Weiterhin wird ein Verfahren zur Herstellung einer Brandschutzverglasung wie auch die Verwendung einer vorgenannten polymerisierbaren Zusammensetzung und/oder eines vorgenannten Polyacrylamid-Hydrogels beschrieben, jeweils als Brandschutzmittel für eine Brandschutzverglasung und/oder bei der Herstellung einer Brandschutzverglasung. Ebenfalls wird die Verwendung einer Polyhydroxyverbindung, insbesondere Glycerin, zur Verbesserung der Haftung eines Polyacrylamid-Hydrogels auf einer Brandschutzverglasung angegeben.

## Beschreibung

Die vorliegende Erfindung betrifft eine polymerisierbare Zusammensetzung zur Herstellung eines Polyacrylamid-Hydrogels, ein entsprechendes Polyacrylamid-Hydrogel sowie eine Brandschutzverglasung umfassend eine vorgenannte polymerisierbare Zusammensetzung oder ein vorgenanntes Polyacrylamid-Hydrogel. Weiterhin betrifft die vorliegende Erfindung ein Verfahren zur Herstellung einer Brandschutzverglasung wie auch die Verwendung einer vorgenannten polymerisierbaren Zusammensetzung und/oder eines vorgenannten Polyacrylamid-Hydrogels, jeweils als Brandschutzmittel für eine Brandschutzverglasung und/oder bei der Herstellung einer Brandschutzverglasung. Die vorliegende Erfindung betrifft ebenfalls die Verwendung einer Polyhydroxyverbindung, insbesondere Glycerin, zur Verbesserung der Haftung eines Polyacrylamid-Hydrogels auf einer Brandschutzverglasung.

Brandschutzverglasungen bestehen üblicherweise aus zwei im Wesentlichen parallel zueinander angeordneten, über einen Zwischenraum (bzw. einen Spalt) voneinander getrennten Glasscheiben, zwischen denen ein Brandschutzmittel angeordnet ist. Im Brandfalle zerspringt die dem Feuer ausgesetzte Glasscheibe, so dass das Brandschutzmittel dem Feuer ausgesetzt wird und seine Struktur unter Absorption erheblicher Wärmemengen verändert. Üblicherweise wird das Brandschutzmittel bei Feuereinwirkung aufgeschäumt, verliert seine Transparenz für Wärmestrahlung und setzt Wasserdampf frei, so dass die dem Feuer abgewandte Seite der Brandschutzverglasung gekühlt und gegen die Einwirkung von Wärmestrahlung des Feuers geschützt wird. Derartige Brandschutzverglasungen sind beispielsweise beschrieben im Dokument DE 102 37 395 A 1.

Aus dem Stand der Technik sind auch bereits Brandschutzverglasungen bekannt, die verhältnismäßig leicht sind und allenfalls gering korrosive Brandschutzmittel enthalten, also etwa in der Brandschutzverglasung vorhandene Metallteile wenig oder gar nicht angreifen. Ebenso sind Brandschutzverglasungen bekannt, welche - im alltäglichen Gebrauch - dauerhaft ihre Transparenz behalten.

In dem Dokument DE 10 2005 018 842 A1 wird eine Brandschutzverglasung beschrieben, welche als Brandschutzmittel ein Polyacrylamid-Hydrogel umfasst.

Das Dokument DE 10 2006 035 262 A1 befasst sich mit einer UV-undurchlässigen Brandschutzverglasung.

Das Dokument EP 0 705 685 A1 betrifft eine Brandschutz-Glaseinheit mit zwei Scheiben und im Abstandsraum zwischen den Scheiben eine im Brandfall aufschäumende Zwischenschicht. Die Zwischenschicht besteht hauptsächlich aus Natron-Wasserglas und Wasser.

Ein feuersicheres Glas wird in dem Dokument WO 01/70495 A1 angegeben.

In dem Dokument CN 105295742 A wird ein feuersicheres Verbundglas beschrieben.

Jedoch bestand auch angesichts des bekannten Standes der Technik noch ein Bedarf, eine verbesserte Brandschutzverglasung bereitzustellen und insbesondere die Haftung eines Brandschutzmittels an den Glasscheiben einer Brandschutzverglasung noch weiter zu verbessern, um vor allem im Brandfall auf der dem Feuer abgewandten ("kalten") Seite der Brandschutzverglasung eine noch bessere und/oder noch länger anhaltende Brandschutzwirkung zu ermöglichen.

Es war daher eine primäre Aufgabe der vorliegenden Erfindung, ein Brandschutzmittel zur Verfügung zu stellen, welches die Herstellung einer leichten Brandschutzverglasung erlauben und allenfalls gering korrosiv gegenüber Metallteilen einer Brandschutzverglasung sein sollte. Dabei sollte das Brandschutzmittel in einer Brandschutzverglasung eine möglichst dauerhafte und hohe Transparenz mit möglichst geringer Beeinträchtigung, etwa durch Bläschenbildung oder unerwünschten Verfärbungen der Brandschutzverglasung, gewährleisten, sowie vor allem auch eine gute oder verbesserte Haftung an den Glasscheiben der Brandschutzverglasung aufweisen. Entsprechend bestanden weitere Aufgaben der vorliegenden Erfindung darin, eine Zusammensetzung zur Herstellung eines verbesserten Brandschutzmittels anzugeben sowie ein verbessertes Brandschutzglas und ein Verfahren zu dessen Herstellung bereitzustellen.

Es wurde nun überraschenderweise gefunden, dass die primäre Aufgabe sowie weitere Aufgaben und/oder Teilaufgaben der vorliegenden Erfindung gelöst werden durch eine polymerisierbare Zusammensetzung zur Herstellung eines Polyacrylamid-Hydrogels, umfassend (oder bestehend aus):
(A) ein oder mehrere polymerisierbare Monomere ausgewählt aus der Gruppe bestehend aus
   - unsubstituiertem Acrylamid,
   - substituierten Acrylamiden
      und
   - deren Gemischen;
(B) ein oder mehrere Salze einwertiger, zweiwertiger und/oder dreiwertiger Metallionen,
(C) ein oder mehrere Vernetzungshilfsmittel,
(D) ein oder mehrere Polymerisationskatalysatoren,
(E) in einer Gesamtmenge von > 1 Massen-%, bezogen auf die Gesamtmasse der polymerisierbaren Zusammensetzung, ein oder mehrere Polyhydroxyverbindungen, die jeweils unabhängig voneinander eine Gesamtzahl von Kohlenstoffatomen im Bereich von 2 bis 6 aufweisen,
   und
(F) Wasser.

In eigenen Untersuchungen wurde gefunden, dass eine vorstehend beschriebene erfindungsgemäße polymerisierbare Zusammensetzung ausgezeichnet geeignet ist zur Herstellung eines erfindungsgemäßen Polyacrylamid-Hydrogels, welches sich als Brandschutzmittel für eine verhältnismäßig leichte Brandschutzverglasung eignet und welches allenfalls geringe korrosive Eigenschaften gegenüber Metallteilen einer Brandschutzverglasung aufweist. In eigenen Versuchen hat sich ebenfalls gezeigt, dass ein als Brandschutzmittel eingesetztes erfindungsgemäßes Polyacrylamid-Hydrogel eine dauerhafte und hohe Transparenz einer Brandschutzverglasung gewährleistet, mit einer allenfalls sehr geringen Beeinträchtigung der Transparenz der Brandschutzverglasung, etwa durch Bläschenbildung oder unerwünschter Verfärbungen. Insbesondere hat sich in eigenen Versuchen gezeigt, dass ein vorstehend angegebenes erfindungsgemäßen Polyacrylamid-Hydrogel ausgezeichnete Haftungseigenschaften an bzw. auf der Oberfläche einer Scheibe einer Brandschutzverglasung aufweist.

Die Erfindung sowie erfindungsgemäß bevorzugte Kombinationen bevorzugter Parameter, Eigenschaften und/oder Bestandteile der vorliegenden Erfindung sind in den beigefügten Ansprüchen definiert. Bevorzugte Aspekte der vorliegenden Erfindung werden auch in der nachfolgenden Beschreibung sowie in den Beispielen angegeben bzw. definiert.

Im Sinne der vorliegenden Erfindung wird unter einem Polyacrylamid-Hydrogel ein an sich auf dem Fachgebiet bekanntes, Polyacrylamid enthaltendes, wasserhaltiges Gel verstanden. Unter einem Gel wird im Rahmen der vorliegenden Erfindung, wie im allgemeinen Sprachgebrauch üblich (dabei aber ohne Festlegung auf eine bestimmte Struktur eines Gels) ein disperses System verstanden, das aus mindestens zwei Bestandteilen besteht. Ein fester Bestandteil (feste Phase) bildet dabei ein schwammartiges, dreidimensionales Netzwerk, dessen Poren durch einen flüssigen Bestandteil (flüssige Phase) ausgefüllt sind.

Bevorzugt ist eine vorstehend beschriebene erfindungsgemäße polymerisierbare Zusammensetzung (oder eine ein in diesem Text als bevorzugt beschriebene erfindungsgemäße polymerisierbare Zusammensetzung), wobei
- die substituierten Acrylamide der Komponente (A) N-Methylolacrylamid umfassen oder aus N-Methylolacrylamid bestehen, oder die Komponente (A) aus N-Methylolacrylamid besteht,
   und/oder
- die ein oder mehreren polymerisierbaren Monomere der Komponente (A) ausgewählt sind aus der Gruppe bestehend aus substituierten Acrylamiden und deren Gemischen,
   wobei vorzugsweise das eine oder mindestens eines der mehreren polymerisierbaren Monomere der Komponente (A) N-Methylolacrylamid ist
   und/oder
- die Komponente (A) in einer Gesamtmenge im Bereich von 3 bis 12 Massen-%, vorzugsweise von 4 bis 10 Massen-%, vorliegt, bezogen auf die Gesamtmasse der polymerisierbaren Zusammensetzung.

In eigenen Untersuchungen hat sich gezeigt, dass eine in diesem Text näher beschriebene erfindungsgemäße polymerisierbare Zusammensetzung, welche als polymerisierbare Monomere N-Methylolacrylamid umfasst (insbesondere zu einem Anteil von ≥ 80 Molprozent der in der polymerisierbaren Zusammensetzung vorliegenden polymerisierbaren Monomere der Komponente (A)), insbesondere in der vorstehend angegebenen Gesamtmenge, bzw. in den vorstehend angegebenen bevorzugten Gesamtmengen, sich besonders gut zur Herstellung eines Polyacrylamid-Hydrogels für eine Brandschutzverglasung eignet, da sich auf diese Weise ein transparentes, allenfalls gering korrosives Polyacrylamid-Hydrogel einer sehr gut für die Befüllung einer Brandschutzverglasung geeigneten Viskosität herstellen lässt.

Bevorzugt ist auch eine vorstehend beschriebene erfindungsgemäße polymerisierbare Zusammensetzung (oder eine ein in diesem Text als bevorzugt beschriebene erfindungsgemäße polymerisierbare Zusammensetzung), wobei
- die ein oder mehreren Salze der Komponente (B) Salze einwertiger und/oder zweiwertiger Metallionen umfassen oder sind;
   und/oder
- die ein oder mehreren Salze der Komponente (B) Salze der Alkalimetalle und/oder Erdalkalimetalle, vorzugsweise Halogensalze, besonders bevorzugt Chloride, der Alkalimetalle und/oder Erdalkalimetalle, umfassen oder sind,
   wobei vorzugsweise eines, mehrere, oder alle Salze der Komponente (B) ausgewählt sind aus der Gruppe bestehend aus NaCl, KCl, MgCl₂, CaCl₂ und deren Gemischen,
   wobei vorzugsweise alle Salze der Komponente (B) ausgewählt sind aus der Gruppe bestehend aus NaCl, MgCl₂, und deren Gemischen;
   und/oder
- die Komponente (B) in einer Gesamtmenge im Bereich von 8 bis 35 Massen-%, vorzugsweise von 10 bis 30 Massen-%, besonders bevorzugt von 15 bis 25 Massen-%, vorliegt, bezogen auf die Gesamtmasse der polymerisierbaren Zusammensetzung.

In eigenen Versuchen wurde festgestellt, dass sich die oben genannten ein oder mehreren Salze der Komponente (B), insbesondere die oben als bevorzugt genannten ein oder mehreren Salze der Komponente (B) und ganz besonders NaCl, MgCl₂ und deren Gemische, ausgezeichnet als u.a. Verdickungsmittel für eine erfindungsgemäße polymerisierbare Zusammensetzung eignen, da sie sich als gut verträglich mit den weiteren Bestandteilen der erfindungsgemäßen polymerisierbaren Zusammensetzung erwiesen haben und zu den vorteilhaften Eigenschaften der erfindungsgemäßen polymerisierbaren Zusammensetzung beitragen. Weiter wurde in eigenen Versuchen festgestellt, dass oberhalb einer Gesamtmenge von 35 Massen-% an Komponente (B) in der erfindungsgemäßen polymerisierbaren Zusammensetzung bereits unerwünschte Trübungseffekte auftreten können.

Ebenfalls bevorzugt ist eine vorstehend beschriebene erfindungsgemäße polymerisierbare Zusammensetzung (oder eine ein in diesem Text als bevorzugt beschriebene erfindungsgemäße polymerisierbare Zusammensetzung), wobei
- eines, mehrere, oder alle Vernetzungshilfsmittel der Komponente (C) ausgewählt sind aus der Gruppe bestehend aus N,N'-Methylenbisacrylamid, Formaldehyd und deren Gemischen,
   wobei vorzugsweise das eine oder mindestens eines der mehreren Vernetzungshilfsmittel der Komponente (C) N,N'-Methylenbisacrylamid ist;
   wobei besonders bevorzugt das Vernetzungshilfsmittel der Komponente (C) N,N'-Me-thylenbisacrylamid ist;
   und/oder
- die Komponente (C), vorzugsweise N,N'-Methylenbisacrylamid, in einer Gesamtmenge im Bereich von 0,001 bis 1,0 Massen-%, vorzugsweise von 0,005 bis 0,5 Massen-%, besonders bevorzugt von 0,01 bis 0, 35 Massen-%, vorliegt, bezogen auf die Gesamtmasse der polymerisierbaren Zusammensetzung.

Sofern N,N'-Methylenbisacrylamid in der erfindungsgemäßen polymerisierbaren Zusammensetzung enthalten ist bzw. eingesetzt wird, werden für die Zwecke der vorliegenden Erfindung die Massenanteile des in der polymerisierbaren Zusammensetzung vorhandenen N,N'-Methylenbisacrylamids nur als bzw. für die (Berechnung der Massenanteile der) Komponente (C) als Vernetzungshilfsmittel der erfindungsgemäßen polymerisierbaren Zusammensetzung berücksichtigt, jedoch nicht (auch) als bzw. für eine andere Komponente (etwa Komponente (A)) der erfindungsgemäßen polymerisierbaren Zusammensetzung.

In eigenen Untersuchungen hat sich gezeigt, dass bei Verwendung von N,N'-Methylen-bisacrylamid als Vernetzungshilfsmittel der Komponente (C) der erfindungsgemäßen polymerisierbaren Zusammensetzung in der vorstehend angegebenen Gesamtmenge, bzw. in den vorstehend angegebenen bevorzugten Gesamtmengen, ein Polyacrylamid-Hydrogel mit einem für den Einsatz als Brandschutzmittel besonders gut geeigneten Vernetzungsgrad erzeugen lässt.

Ebenfalls ist bevorzugt eine vorstehend beschriebene erfindungsgemäße polymerisierbare Zusammensetzung (oder eine ein in diesem Text als bevorzugt beschriebene erfindungsgemäße polymerisierbare Zusammensetzung), wobei
- der eine, mehrere oder alle Polymerisationskatalysatoren der Komponente (D) ausgewählt sind aus der Gruppe bestehend aus Ethylenglykol; Diethanolamin; Triethanolamin; N,N,N',N'-Tetramethylethylendiamin und deren Gemischen,
   wobei vorzugsweise die Komponente (D) ein Gemisch von Ethylenglykol und Triethanolamin umfasst oder ist, wobei besonders bevorzugt das Massenverhältnis von Ethylenglykol zu Triethanolamin im Bereich von 0,5 : 1 bis 1 : 0,5, insbesondere bevorzugt von 0,75 : 1 bis 1 : 0,75 und ganz besonders bevorzugt bei 1 : 1 liegt;
   und/oder
- die Komponente (D) in einer Gesamtmenge im Bereich von 0,009 bis 1,5 Massen-%, vorzugsweise von 0,01 bis 1 Massen-%, besonders bevorzugt von 0,015 bis 0,5 Massen-%, vorliegt, bezogen auf die Gesamtmasse der polymerisierbaren Zusammensetzung.

Die Zeit, die erforderlich ist für die Polymerisierung der erfindungsgemäßen polymerisierbaren Zusammensetzung zu einem erfindungsgemäßen Polyacrylamid-Hydrogel, hängt u.a. von der Art und der Konzentration des bzw. der eingesetzten Polymerisationskatalysatoren ab. Es hat sich in eigenen Versuchen gezeigt, dass sich bei Verwendung der hier vorstehend angegebenen Polymerisationskatalysatoren, insbesondere bei Verwendung der hier vorstehend angegebenen bevorzugten Polymerisationskatalysatoren, in der vorstehend angegebenen Gesamtmenge, insbesondere in den vorstehend angegebenen bevorzugten Gesamtmengen, eine rasche und vollständige Polymerisation der erfindungsgemäßen polymerisierbaren Zusammensetzung zu einem erfindungsgemäßen Polyacrylamid-Hydrogel erreichen lässt, wobei letzteres sich hervorragend als Brandschutzmittel für eine Brandschutzverglasung eignet.

Weiterhin ist bevorzugt eine vorstehend beschriebene erfindungsgemäße polymerisierbare Zusammensetzung (oder eine ein in diesem Text als bevorzugt beschriebene erfindungsgemäße polymerisierbare Zusammensetzung), wobei
- die ein oder mehreren Polyhydroxyverbindungen der Komponente (E) ein oder mehrere Polyhydroxyverbindungen umfassen oder sind, die jeweils unabhängig voneinander eine Gesamtzahl von Kohlenstoffatomen im Bereich von 3 bis 6, aufweisen und/oder jeweils unabhängig voneinander eine Gesamtzahl von Hydroxygruppen im Bereich von 2 bis 6, vorzugsweise von 3 bis 6 aufweisen,
   wobei vorzugsweise die eine, mehrere, oder alle Polyhydroxyverbindungen der Komponente (E) ausgewählt sind aus der Gruppe bestehend aus Propylenglykol, Diethylenglykol, Triethylenglykol, Mannit, Sorbit, Xylit, Glucose, Glycerin und deren Gemischen,
   wobei besonders bevorzugt die oder mindestens eine der ein oder mehreren Polyhydroxyverbindungen der Komponente (E) Glycerin ist und ganz besonders bevorzugt die Komponente (E) Glycerin ist;
   und/oder
- die Komponente (E), vorzugsweise Glycerin, in einer Gesamtmenge im Bereich von > 1 bis ≤ 12 Massen-%, vorzugsweise von ≥ 1,5 bis ≤ 11 Massen-%, besonders bevorzugt von ≥ 2 bis ≤ 7,5 Massen-%, ganz besonders bevorzugt von ≥ 3 bis ≤ 7,5 Massen-%, vorliegt, bezogen auf die Gesamtmasse der polymerisierbaren Zusammensetzung.

Die als Polymerisationskatalysatoren der Komponente (D) in der erfindungsgemäßen polymerisierbaren Zusammensetzung einsetzbaren Verbindungen Ethylenglykol, Diethanolamin und/oder Triethanolamin können in der erfindungsgemäßen polymerisierbaren Zusammensetzung auch als Polyhydroxyverbindungen der Komponente (E) eingesetzt werden bzw. vorhanden sein. Sofern Ethylenglykol, Diethanolamin und/oder Triethanolamin in der erfindungsgemäßen polymerisierbaren Zusammensetzung vorhanden sind bzw. eingesetzt werden, werden für die Zwecke der vorliegenden Erfindung (nur) die 1 Massen-% (bezogen auf die Gesamtmasse der polymerisierbaren Zusammensetzung) übersteigenden Massenanteile von in der polymerisierbaren Zusammensetzung insgesamt vorhandenem Ethylenglykol, Diethanolamin, Triethanolamin, oder deren Gemischen, bei der Berechnung der Massenanteile der Komponente (E) in der erfindungsgemäßen polymerisierbaren Zusammensetzung berücksichtigt.

Es hat sich in eigenen Versuchen gezeigt, dass sich bei Verwendung der hier vorstehend angegebenen Polyhydroxyverbindungen, insbesondere bei Verwendung der hier vorstehend angegebenen bevorzugten bzw. besonders bevorzugten Polyhydroxyverbindungen, in der vorstehend angegebenen Gesamtmenge, insbesondere in den vorstehend angegebenen bevorzugten Gesamtmengen, aus der erfindungsgemäßen polymerisierbaren Zusammensetzung ein erfindungsgemäßes Polyacrylamid-Hydrogel herstellen lässt, welches ausgezeichnete Eigenschaften als Brandschutzmittel für eine Brandschutzverglasung aufweist. So konnte gezeigt werden, dass durch die Verwendung bzw. den Einsatz der vorstehend angegebenen Polyhydroxyverbindungen die Haftung eines erfindungsgemäßen Polyacrylamid-Hydrogels an einer Brandschutzverglasung, insbesondere an der Oberfläche einer Scheibe einer Brandschutzverglasung, deutlich verbessert werden kann, gegenüber einem nicht-erfindungsgemäßen Brandschutzmittel auf Polyacrylamid-Basis.

Durch die verbesserte Haftung des erfindungsgemäßen Polyacrylamid-Hydrogels an der Oberfläche der Scheibe einer Brandschutzverglasung wird bereits auch ohne Auftreten eines Brandereignisses eine erhöhte Verkehrssicherheit erzielt, da etwa im Fall eines Bruches durch Verkehrslast, Glaspartikel oder Glasscherben der erfindungsgemäßen Brandschutzverglasung bereits vom Brandschutzmittel zurückgehalten werden und sich nur in deutlich geringerem Maße von der Bruchstelle entfernen, beispielsweise durch den angrenzenden Raum geschleudert werden. Auf diese Weise wird u.a. die Verletzungsgefahr für Personen verringert.

Da nach eigenen Untersuchungen die verbesserte Haftung des erfindungsgemäßen Polyacrylamid-Hydrogels an der Oberfläche der Scheibe einer Brandschutzverglasung auch im Brandfall lange und zuverlässig anhält, ergibt sich durch die Verwendung einer erfindungsgemäßen Brandschutzverglasung auch eine erhöhte Sicherheit im Brandfall. Es hat sich in eigenen Versuchen herausgestellt, dass eine entsprechende Brandschutzverglasung im Brandfall auf der dem Brand abgewandten ("kalten") Seite durch die verbesserte Haftung des erfindungsgemäßen Polyacrylamid-Hydrogels an der Oberfläche der Brandschutzverglasung eine deutlich länger anhaltende Brandschutzwirkung aufweist als eine vergleichbare, aber nicht-erfindungsgemäße Brandschutzverglasung.

Ein zusätzlicher Vorteil, der mit der Verwendung der hier vorstehend angegebenen Polyhydroxyverbindungen verbunden ist, insbesondere mit der Verwendung der hier vorstehend angegebenen bevorzugten bzw. besonders bevorzugten Polyhydroxyverbindungen, in der vorstehend angegebenen Gesamtmenge, insbesondere in den vorstehend angegebenen bevorzugten Gesamtmengen, besteht darin, dass eine erfindungsgemäße Brandschutzverglasung, welche unter Zuhilfenahme einer erfindungsgemäßen polymerisierbaren Zusammensetzung bzw. eines erfindungsgemäßen Polyacrylamid-Hydrogels hergestellt wurde, einen verbesserten Frostschutz aufweist gegenüber einer vergleichbaren Brandschutzverglasung, welche aber keine der hier vorstehend angegebenen Polyhydroxyverbindungen enthält oder welche hier vorstehend angegebene Polyhydroxyverbindungen nur in geringeren Gesamtmengen enthält. Die in diesem Text beschriebene erfindungsgemäße Brandschutzverglasung ist daher auch besonders geeignet für den Einsatz im Außenbereich.

Es ist weiterhin auch bevorzugt eine vorstehend beschriebene erfindungsgemäße polymerisierbare Zusammensetzung (oder eine ein in diesem Text als bevorzugt beschriebene erfindungsgemäße polymerisierbare Zusammensetzung), wobei
- die Komponente (F), Wasser, in der polymerisierbaren Zusammensetzung in einer zur Erreichung von 100 Massen-% der polymerisierbaren Zusammensetzung erforderlichen Gesamtmenge vorliegt;
   und/oder
- die polymerisierbare Zusammensetzung einen pH-Wert im Bereich von 5 bis 9, vorzugsweise im Bereich von 5,5 bis 8,5 besonders bevorzugt im Bereich von 6 bis 8, aufweist.

Die vorliegende Erfindung betrifft auch ein Polyacrylamid-Hydrogel, hergestellt oder herstellbar durch Polymerisation der polymerisierbaren Anteile einer vorstehend beschriebenen erfindungsgemäßen polymerisierbaren Zusammensetzung (oder einer in diesem Text als bevorzugt beschriebenen erfindungsgemäßen polymerisierbaren Zusammensetzung).

Es hat sich in eigenen Untersuchungen gezeigt, dass ein erfindungsgemäßes Polyacrylamid-Hydrogel als Brandschutzmittel für eine Brandschutzverglasung ausgezeichnet geeignet ist, da es auch über längere Zeiträume stabil bleibt und kaum oder gar nicht zur Bläschenbildung neigt und, insbesondere, wenn die vorstehend angegebenen bevorzugten bzw. besonders bevorzugten Polyhydroxyverbindungen in der vorstehend angegebenen Gesamtmenge, insbesondere in den vorstehend angegebenen bevorzugten Gesamtmengen, zu dessen Herstellung eingesetzt werden, weitestgehend oder vollständig UV-stabil ist. Eine das erfindungsgemäße Polyacrylamid-Hydrogel als Brandschutzmittel enthaltende erfindungsgemäße Brandschutzverglasung zeichnet sich daher durch nur äußerst geringe oder gar nicht auftretende, alterungsbedingte, unerwünschte Verfärbungen oder Beeinträchtigungen der Transparenz und/oder der Gestaltungsästhetik aus.

Hinsichtlich bevorzugter Ausgestaltungen eines hier vorgenannten erfindungsgemäßen Polyacrylamid-Hydrogels gelten die für die erfindungsgemäße polymerisierbare Zusammensetzung vorstehend angegebenen Erläuterungen, insbesondere betreffend mögliche bevorzugte Ausführungsformen und mögliche bzw. bevorzugte Kombinationen, entsprechend (gegebenenfalls sinngemäß), und umgekehrt.

Die vorliegende Erfindung betrifft weiterhin auch eine Brandschutzverglasung, umfassend
- eine Anordnung von mindestens zwei, wenigstens teilweise für sichtbares Licht transparenten, Scheiben, welche in einem Abstand voneinander, vorzugsweise in einem Abstand voneinander und parallel zueinander, angeordnet sind, wobei die Anordnung mindestens einen zwischen jeweils zwei Scheiben liegenden Zwischenraum aufweist, wobei vorzugsweise der Zwischenraum durch den Abstand der zwei Scheiben voneinander sowie durch die Flächen der zwei Scheiben definiert ist;
   und
- in dem mindestens einen Zwischenraum eine erfindungsgemäße polymerisierbare Zusammensetzung (oder eine in diesem Text als bevorzugt beschriebene erfindungsgemäße polymerisierbare Zusammensetzung) oder ein erfindungsgemäßes Polyacrylamid-Hydrogel (oder ein in diesem Text als bevorzugt beschriebenes erfindungsgemäßes polymerisierbares Polyacrylamid-Hydrogel).

Hinsichtlich bevorzugter Ausgestaltungen einer hier vorgenannten erfindungsgemäßen Brandschutzverglasung gelten die für das erfindungsgemäße Polyacrylamid-Hydrogel und/oder für die erfindungsgemäße polymerisierbare Zusammensetzung vorstehend angegebenen Erläuterungen, insbesondere betreffend mögliche bevorzugte Ausführungsformen und mögliche bzw. bevorzugte Kombinationen, entsprechend (gegebenenfalls sinngemäß), und umgekehrt.

Bevorzugt ist eine vorstehend angegebene erfindungsgemäße Brandschutzverglasung, wobei die wenigstens teilweise für sichtbares Licht transparenten Scheiben Glasscheiben sind und vorzugsweise Silikat-haltiges Glas umfassen oder daraus bestehen, welches vorzugsweise unbeschichtet ist, besonders bevorzugt Silikat-haltiges Glas welches ausgewählt ist aus der Gruppe bestehend aus Kalknatronsilikatglas, Flachglas, Sonnenschutzglas, Einscheiben-Sicherheitsglas (ESG), Verbundsicherheitsglas (VSG), Borosilikat-Glas und deren Kombinationen.

Bevorzugt ist eine vorstehend angegebene erfindungsgemäße Brandschutzverglasung, wobei der Abstand, in welchem die mindestens zwei, wenigstens teilweise für sichtbares Licht transparenten, Scheiben, vorzugsweise parallel zueinander, voneinander angeordnet sind, im Bereich von ≥ 8 mm bis ≤ 47 mm, vorzugsweise von ≥ 9 mm bis ≤ 46 mm, besonders bevorzugt von ≥ 10 mm bis ≤ 45 mm liegt. Der Abstand, in welchem die (mindestens zwei) vorgenannten Scheiben voneinander angeordnet sind, definiert dabei vorzugsweise jeweils den Zwischenraum der vorstehend angegebenen erfindungsgemäßen Brandschutzverglasung. Der Abstand, in welchem die mindestens zwei, vorgenannten Scheiben voneinander angeordnet sind und/oder der Zwischenraum der vorstehend angegebenen erfindungsgemäßen Brandschutzverglasung definieren vorzugsweise die Gelstärke (d.h. die Schichtdicke) des in der erfindungsgemäßen Brandschutzverglasung eingesetzten erfindungsgemäßen Polyacrylamid-Hydrogels.

Die vorgenannten Glasscheiben, welche sich für den Einsatz in einer vorstehend angegebenen erfindungsgemäßen Brandschutzverglasung eignen, können farblos oder eingefärbt sein.

In eigenen Untersuchungen wurde gefunden, dass eine erfindungsgemäße Brandschutzverglasung auch ausgezeichnete Schallschutzeigenschaften aufweist, welche sogar besser waren, als die Schallschutzeigenschaften eines der erfindungsgemäßen Brandschutzverglasung ähnlichen Brandschutzverglasung, deren Polyacrylamid-Hydrogel aber nicht in einer Gesamtmenge von > 1 Massen-%, bezogen auf die Gesamtmasse der polymerisierbaren Zusammensetzung, ein oder mehrere Polyhydroxyverbindungen, die jeweils unabhängig voneinander eine Gesamtzahl von Kohlenstoffatomen im Bereich von 2 bis 6 aufweisen, enthielt (und welches Polyacrylamid-Hydrogel insbesondere kein Glycerin enthielt).

In einer weiteren Ausgestaltung betrifft die vorliegende Erfindung auch ein Verfahren zur Herstellung einer Brandschutzverglasung, umfassend die Schritte
V1) Bereitstellen oder Herstellen einer Anordnung von mindestens zwei, wenigstens teilweise für sichtbares Licht transparenten, Scheiben, welche in einem Abstand voneinander, vorzugsweise in einem Abstand voneinander und parallel zueinander, angeordnet sind, wobei die Anordnung mindestens einen, zwischen jeweils zwei Scheiben liegenden, Zwischenraum aufweist,
V2) Bereitstellen oder Herstellen einer vorstehend beschriebenen erfindungsgemäßen polymerisierbaren Zusammensetzung (oder einer in diesem Text als bevorzugt beschriebenen erfindungsgemäßen polymerisierbaren Zusammensetzung), wobei vorzugsweise die polymerisierbare Zusammensetzung wenigstens teilweise entgast wurde;
V3) wenigstens teilweises, vorzugsweise vollständiges, Befüllen mindestens eines zwischen jeweils zwei Scheiben der in Schritt V1) bereitgestellten oder hergestellten Anordnung liegenden Zwischenraums mit der in Schritt V2) bereitgestellten oder hergestellten polymerisierbaren Zusammensetzung
   und
V4) Polymerisieren oder polymerisieren lassen der polymerisierbaren Anteile der in Schritt V3) angegebenen polymerisierbaren Zusammensetzung in dem mindestens einen, zwischen jeweils zwei Scheiben liegenden, Zwischenraum der Anordnung, vorzugsweise in Kontakt mit den dem mindestens einen Zwischenraum zugewandten Oberflächen der zwei Scheiben oder in Kontakt mit den dem mindestens einen Zwischenraum zugewandten Haftmittel-beschichteten (dazu siehe unten) Oberflächen der zwei Scheiben,
   vorzugsweise so dass ein erfindungsgemäßes Polyacrylamid-Hydrogel resultiert.

Hinsichtlich bevorzugter Ausgestaltungen eines hier vorgenannten erfindungsgemäßen Verfahrens gelten die für die erfindungsgemäße Brandschutzverglasung, für das erfindungsgemäße Polyacrylamid-Hydrogel und/oder für die erfindungsgemäße polymerisierbare Zusammensetzung vorstehend angegebenen Erläuterungen, insbesondere betreffend mögliche bevorzugte Ausführungsformen und mögliche bzw. bevorzugte Kombinationen, entsprechend (gegebenenfalls sinngemäß), und umgekehrt.

Die in Schritt V2) des vorstehend angegebenen erfindungsgemäßen Verfahrens bereitgestellte oder hergestellte erfindungsgemäße polymerisierbare Zusammensetzung kann in einer ersten Variante als fertig abgemischte Zusammensetzung umfassend alle Komponenten (A) bis (F) eingesetzt werden. In dieser Variante ist es bevorzugt, die fertig abgemischte polymerisierbare Zusammensetzung vor der Durchführung von Schritt V3) zu homogenisieren, um lokale Konzentrationsgradienten einzelner Komponenten darin zu vermeiden, die ansonsten die Herstellung des Polyacrylamid-Hydrogels ungünstig beeinflussen könnten. Auch die Qualität eines nach dem erfindungsgemäßen Verfahren hergestellten Brandschutzglases könnte letztlich von einer nicht im homogenen Zustand eingesetzten polymerisierbaren Zusammensetzung ungünstig beeinflusst werden. Weiter ist es in dieser Variante bevorzugt, wenn die fertig abgemischte polymerisierbare Zusammensetzung vor der Durchführung von Schritt V3) zumindest teilweise entgast wird.

In einer zweiten Variante kann die in Schritt V2) des vorstehend angegebenen erfindungsgemäßen Verfahrens bereitgestellte oder hergestellte erfindungsgemäße polymerisierbare Zusammensetzung erst kurz vor Durchführung des Schrittes V3) fertig abgemischt werden, wobei vorzugsweise die Komponenten (A) bis (D) und (F) (bzw. Komponenten (A) bis (C) und (E) bis (F); oder Komponenten (A) bis (C) und (F)) als fertig abgemischte Vormischung eingesetzt werden können, während Komponente (E) (und/oder gegebenenfalls Komponente (D)) erst kurz vor Durchführung von Schritt V3) mit der vorgenannten fertig abgemischten Vormischung vereinigt und mit dieser vermischt wird. Auch in dieser Variante ist es bevorzugt, wenn durch ausreichende Durchmischung aller Komponenten lokale Konzentrationsgradienten einzelner Komponenten der polymerisierbaren Zusammensetzung vor bzw. bei der Durchführung von Schritt V3) möglichst vermieden werden und/oder wenn die fertig abgemischte polymerisierbare Zusammensetzung vor der Durchführung von Schritt V3) zumindest teilweise entgast wird.

Bevorzugt ist es, wenn das erfindungsgemäße Polyacrylamid-Hydrogel *in situ* in einem zwischen zwei benachbarten Scheiben der vorgenannten Anordnung liegenden Zwischenraum erzeugt wird.

In Schritt V3) wird demnach vorzugsweise mindestens ein zwischen jeweils zwei Scheiben der in Schritt V1) bereitgestellten oder hergestellten Anordnung liegender Zwischenraum mit der in Schritt V2) bereitgestellten oder hergestellten polymerisierbaren Zusammensetzung mindestens teilweise und vorzugsweise nahezu vollständig ausgefüllt.

Dazu wird vorzugsweise in einer ersten Variante des erfindungsgemäßen Verfahrens die (vorzugsweise homogenisierte und/oder mindestens teilweise entgaste, dazu siehe oben) erfindungsgemäße polymerisierbare Zusammensetzung als fertig abgemischte Zusammensetzung umfassend alle Komponenten (A) bis (F) eingesetzt.

In einer zweiten bevorzugten Variante des erfindungsgemäßen Verfahrens werden die Komponenten (A) bis (D) und (F) der erfindungsgemäßen polymerisierbaren Zusammensetzung als fertig abgemischte Vormischung eingesetzt und erst kurz vor Durchführung von Schritt V3) mit der Komponente (E) vereinigt und mit dieser vermischt. Vorzugsweise wird auch in dieser zweiten bevorzugten Variante die vor der Durchführung von Schritt V3) vorliegende Zusammensetzung umfassend alle Komponenten (A) bis (F) homogenisiert und/oder mindestens teilweise entgast.

In einer dritten bevorzugten Variante des erfindungsgemäßen Verfahrens werden die Komponenten (A) bis (C) und (F) der erfindungsgemäßen polymerisierbaren Zusammensetzung als fertig abgemischte Vormischung eingesetzt und erst kurz vor Durchführung von Schritt V3) mit den Komponenten (D) und (E) vereinigt und mit diesen vermischt. Vorzugsweise wird auch in dieser dritten bevorzugten Variante die vor der Durchführung von Schritt V3) vorliegende Zusammensetzung umfassend alle Komponenten (A) bis (F) homogenisiert und/oder mindestens teilweise entgast.

Vorzugsweise wird der Zwischenraum zwischen jeweils zwei benachbarten Scheiben der Brandschutzverglasung durch die erfindungsgemäße polymerisierbare Zusammensetzung bzw. durch das erfindungsgemäße Polyacrylamid-Hydrogel im Wesentlichen vollständig ausgefüllt. Zweckmäßigerweise werden dabei Hohlräume, insbesondere Luftblasen, zwischen den Scheiben vermieden. Derartige Hohlräume könnten die Transparenz der Scheiben (unter Nicht-Brandbedingungen) trüben, was in aller Regel unerwünscht ist. Darüber hinaus wird durch eine im Wesentlichen vollständige Befüllung des Spaltes mit der erfindungsgemäßen polymerisierbaren Zusammensetzung bzw. dem erfindungsgemäßen Polyacrylamid-Hydrogel sichergestellt, dass im Brandfall unter Hitzeeinwirkung die zuvor genannten Vorteile der Brandschutzverglasung in möglichst vollständigem Umfang erreicht werden.

Um eine Befüllung des Zwischenraumes mit der erfindungsgemäßen polymerisierbaren Zusammensetzung in einfacher Art und Weise sicherzustellen, sind der Zwischenraum und im Wesentlichen die allfällig vorhandenen Stirnflächen der Scheiben vorzugsweise von einer äußeren Ummantelung umfasst. Dadurch ist es möglich, beispielsweise die erfindungsgemäße polymerisierbare Zusammensetzung vor der Durchführung von Schritt V4) nahezu vollständig in den Zwischenraum einzufüllen) (bzw. bei ausreichend hoher Fließfähigkeit des Polyacrylamid-Hydrogels, auch das Polyacrylamid-Hydrogel nach Durchführung des Schritts V4)). Die äußere Ummantelung dient dabei dem Zweck, ein Auslaufen des Brandschutzmittels während des Füllungsvorgangs der Brandschutzverglasung zu verhindern.

Vorzugsweise handelt es sich bei der Ummantelung um einen biegsamen Körper. Alternativ kann jedoch auch ein starrer Rahmen vorgesehen sein. Bei stärkerer Erhitzung der Scheiben einer erfindungsgemäßen Brandschutzverglasung im Brandfall kommt es zu einer Ausdehnung der dem Brandherd zugewandten Scheibe in Folge der Erwärmung. Gleichzeitig steigt der Druck im Zwischenraum aufgrund der freigesetzten Gase wie beispielsweise Wasserdampf an. Beide Ursachen führen dazu, dass sich die dem Brandherd zugewandte Scheibe der Brandschutzverglasung stärker ausdehnt als die dem Brandherd abgewandte Scheibe. Erfindungsgemäß ist es daher bevorzugt, die äußere Ummantelung des Zwischenraumes zwischen jeweils zwei Scheiben der Brandschutzverglasung und/oder der Stirnflächen der Scheiben so auszubilden, dass die stärkere Ausdehnung der dem Brandherd zugewandten Scheibe zu einem Aufreißen oder zur Öffnung der Ummantelung führt und somit der Zwischenraum gegenüber der Umgebung freigelegt wird. Die Freigabe des Zwischenraumes im Brandfall sollte vorzugsweise vollständig erfolgen, so dass die Entgasung des Brandschutzmittels zumindest in Nähe der Stirnseiten des Spaltes ablaufen kann. Auf diese Weise ist eine gute Kühlwirkung durch das erfindungsgemäße Polyacrylamid-Hydrogel auch dann sichergestellt, wenn die dem Brandherd zugewandte Scheibe noch nicht zerbrochen ist.

In einer alternativen Ausgestaltung des erfindungsgemäßen Verfahrens ist es auch möglich, Schritt V3) so auszuführen, dass die erfindungsgemäße polymerisierbare Zusammensetzung bzw. das erfindungsgemäße Polyacrylamid-Hydrogel vor dem Verbunden von Scheiben auf wenigstens eine der beiden Scheiben aufgebracht wird. Dabei wird zweckmäßigerweise und bevorzugt so vorgegangen, dass zwischen der erfindungsgemäßen polymerisierbaren Zusammensetzung bzw. dem Polyacrylamid-Hydrogel und der zugehörigen Scheibe keine Gasblasen eingeschlossen werden.

In Schritt V4) erfolgt das Polymerisieren (oder Polymerisieren lassen) der polymerisierbaren Anteile der in Schritt V3) angegebenen polymerisierbaren Zusammensetzung. Vorzugsweise wird hierzu der in Schritt V3) angegebenen polymerisierbaren Zusammensetzung ein Radikalstarter hinzugefügt, um die Polymerisation zu beschleunigen.

Bevorzugt ist daher ein vorstehend beschriebenes erfindungsgemäßes Verfahren (oder ein in diesem Text als bevorzugt beschriebenes erfindungsgemäßes Verfahren), wobei der polymerisierbaren Zusammensetzung, vorzugsweise nach Schritt V3) und/oder vor oder während Schritt V4), zusätzlich ein Radikalstarter hinzugefügt wird,

vorzugsweise ein Radikalstarter ausgewählt aus der Gruppe bestehend aus
- einer Peroxid-haltigen Verbindung, vorzugsweise ausgewählt aus der Gruppe bestehend aus Dibenzoylperoxid, einem Salz der Peroxodischwefelsäure (vorzugsweise Dinatriumperoxodisulfat und Ammoniumperoxodisulfat) und deren Gemischen;
- einer Azogruppen-haltigen Verbindung, vorzugsweise Azobisisobutyronitril
   und
- Riboflavin.

Besonders bevorzugt als Radikalstarter für die Zugabe zu der erfindungsgemäßen polymerisierbaren Zusammensetzung sind Peroxid-haltige Verbindungen, ganz besonders bevorzugt sind Salze der Peroxodischwefelsäure und deren Gemische, insbesondere bevorzugt Dinatriumperoxodisulfat, Ammoniumperoxodisulfat und deren Gemische.

Dem Fachmann sind übliche und auch im vorliegenden Fall geeignete Mengen bzw. Konzentrationen an Radikalstartern bekannt, bzw. der Fachmann kann entsprechend für den oben beschriebenen Zweck geeignete Mengen bzw. Konzentrationen an Radikalstartern leicht durch Routinemaßnahmen ermitteln. Wie dem Fachmann bekannt ist, ist die für die Polymerisation in Schritt V4) erforderliche Zeit u.a. abhängig von der Konzentration eines eingesetzten Radikalstarters.

Sofern Riboflavin als Radikalstarter für den oben beschriebenen Zweck eingesetzt wird, kann die Radikalreaktion auf an sich bekannte Weise durch gezieltes Einstrahlen von blauviolettem Licht gestartet werden. Auf diese Weise kann der Zeitpunkt des Beginns der Radikalreaktion gezielt gewählt werden, was insbesondere in der industriellen Fertigung von Brandschutzverglasungen vorteilhaft sein kann. Der Fachmann wird Riboflavin selbstverständlich nur in solchen Fällen als Radikalstarter einsetzen, in denen die sonstigen Eigenschaften von Riboflavin (z.B. Farbe, UV-Aktivität) unter den Bedingungen des erfindungsgemäßen Verfahrens oder in einer erfindungsgemäßen Brandschutzverglasung nicht stören oder sogar erwünscht sind.

Bevorzugt ist auch ein vorstehend beschriebenes erfindungsgemäßes Verfahren (oder ein in diesem Text als bevorzugt beschriebenes erfindungsgemäßes Verfahren), wobei vor Schritt V3) ein zusätzlicher Schritt V2a) durchgeführt wird:
V2a) Aufbringen auf zumindest einen Teil der dem Zwischenraum zugewandten Oberflächen der mindestens zwei Scheiben, einer Zusammensetzung enthaltend ein Silan-haltiges Haftmittel, vorzugsweise ein Haftmittel enthaltend ein oder mehrere Trimethoxysilyl-Gruppen-haltige Silane.

Durch Aufbringen einer Zusammensetzung enthaltend ein Silan-haltiges Haftmittel in Schritt V2a) kann die Haftung eines erfindungsgemäßen Polyacrylamid-Hydrogels an der Oberfläche einer Scheibe der erfindungsgemäßen Brandschutzverglasung noch weiter verbessert werden. Als Silan-haltige Haftmittel werden erfindungsgemäß vorzugsweise N-[3-(Trimethoxysilyl)propyl]ethylendiamin und/oder Derivate davon eingesetzt, vorzugsweise 1,2-Ethandiamin, N-{3-trimethoxysilyl)propyl-N-{ethenylphenyl)methyl}-Derivate, jeweils (in allen Fällen) einschließlich deren Salze mit Mineralsäuren, vorzugsweise deren Hydrochloride.

Sofern Schritt V2a) in dem erfindungsgemäßen Verfahren durchgeführt wird, resultieren daraus dem Zwischenraum zugewandte, zumindest teilweise beschichtete (dazu siehe oben), Oberflächen der vorstehend genannten (mindestens) zwei Scheiben, welche einen solchen Zwischenraum bilden. Die einem Zwischenraum zugewandten Oberflächen der mindestens zwei Scheiben sind im Fall der Ausgestaltung des erfindungsgemäßen Verfahrens, welches den Schritt V2a) umfasst, teilweise oder vollständig mit einem Silan-haltigen Haftmittel beschichtet.

Bevorzugt ist ein erfindungsgemäßes Verfahren, wobei die Polymerisation (bzw. Polykondensation) der erfindungsgemäßen polymerisierbaren Zusammensetzung zum erfindungsgemäßen Polyacrylamid-Hydrogel im Schritt V4) (dazu siehe unten) unmittelbar in dem bzw. in einem zwischen zwei benachbarten Scheiben der Brandschutzverglasung liegenden Zwischenraum stattfindet. Sofern das erfindungsgemäße Polyacrylamid-Hydrogel dagegen ausreichend fließfähig ist, kann das Befüllen des besagten Zwischenraums auch nach Herstellen des Polyacrylamid-Hydrogels (dann mit diesem Polyacrylamid-Hydrogel) stattfinden.

Ebenfalls bevorzugt ist es, wenn jeweils benachbarte Scheiben durch das erfindungsgemäße Polyacrylamid-Hydrogel im Wesentlichen vollflächig miteinander verbunden sind, wobei die Scheiben insbesondere aufgrund der hohen Adhäsionskräfte des Brandschutzmittels miteinander verbunden sind. Bei ausreichend hohen Adhäsionskräften des erfindungsgemäßen Polyacrylamid-Hydrogels kann im Idealfall auf den Einsatz sonstiger Befestigungsmittel, z.B. metallische Klemmen, vollständig verzichtet werden.

Ferner ist es bevorzugt, die Scheiben der erfindungsgemäßen Brandschutzverglasung so in einem Rahmen aufzunehmen, dass die Scheiben wenigstens einen Freiheitsgrad aufweisen, der eine Bewegung der dem Brandherd zugewandten Scheibe relativ zu der dem Brandherd abgewandten Scheibe ermöglicht. Damit wird erreicht, dass die dem Brandherd zugewandte Scheibe erst bei erheblicher Wärmeeinwirkung und daher im Brandfalle spät zerbricht. Dabei sind die Scheiben der erfindungsgemäßen Brandschutzverglasung zweckmäßigerweise derart miteinander verbunden, dass vorzugsweise sowohl in Richtung der Stirnflächen der Scheibe als auch quer dazu eine Lageverschiebung der in Richtung auf den Brandherd gelegenen Scheibe gegenüber der dem Brandherd abgewandten Scheibe möglich ist. Diese Maßnahmen tragen dazu bei, dass die dem Brandherd zugewandte Scheibe später reißt oder zerspringt.

Die Breite des Zwischenraumes zwischen jeweils zwei benachbarten Scheiben einer erfindungsgemäßen Brandschutzverglasung ergibt sich nach vollständiger Ausfüllung des Zwischenraumes mit dem Brandschutzmittel (d.i. das erfindungsgemäße Polyacrylamid-Hydrogel) im Wesentlichen durch die Schichtdicke des Brandschutzmittels oder durch entsprechende Abstandshalter, die zwischen den benachbarten Scheiben eingesetzt sind. Durch die Wahl der Schichtdicke des Brandschutzmittels lässt sich unter anderem die Brandschutzzeit und die Intensität der Strahlungsminderung durch die Brandschutzverglasung einstellen. Zudem ist eine gleichbleibende Stärke der Brandschutzverglasung auch im Hinblick auf den späteren Einbau, z.B. in einen Fensterrahmen, wünschenswert.

Die vorliegende Erfindung betrifft auch die Verwendung einer vorstehend beschriebenen erfindungsgemäßen polymerisierbaren Zusammensetzung (oder einer ein in diesem Text als bevorzugt beschriebenen erfindungsgemäßen polymerisierbaren Zusammensetzung), oder eines vorstehend beschriebenen erfindungsgemäßen Polyacrylamid-Hydrogels (oder eines in diesem Text als bevorzugt beschriebenen erfindungsgemäßen Polyacrylamid-Hydrogels) als Brandschutzmittel für eine Brandschutzverglasung und/oder bei der Herstellung einer Brandschutzverglasung.

Hinsichtlich bevorzugter Ausgestaltungen einer hier vorgenannten erfindungsgemäßen Verwendung einer erfindungsgemäßen polymerisierbaren Zusammensetzung oder eines erfindungsgemäßen Polyacrylamid-Hydrogels gelten die für das erfindungsgemäße Verfahren, für die erfindungsgemäße Brandschutzverglasung, für das erfindungsgemäße Polyacrylamid-Hydrogel und/oder für die erfindungsgemäße polymerisierbare Zusammensetzung vorstehend angegebenen Erläuterungen, insbesondere betreffend mögliche bevorzugte Ausführungsformen und mögliche bzw. bevorzugte Kombinationen, entsprechend (gegebenenfalls sinngemäß), und umgekehrt.

Ebenfalls betrifft die vorliegende Erfindung die Verwendung einer vorstehend definierten Polyhydroxyverbindung (oder einer ein in diesem Text als bevorzugt beschriebenen Polyhydroxyverbindung)
- als Zusatz zu einer polymerisierbaren Zusammensetzung zur Herstellung eines Polyacrylamid-Hydrogels und/oder zu einem Polyacrylamid-Hydrogel, vorzugsweise zu einem aus der polymerisierbaren Zusammensetzung hergestellten oder herstellbaren Polyacrylamid-Hydrogel,
   vorzugsweise zur Verbesserung der Haftung des Polyacrylamid-Hydrogels an einer Scheibe einer Brandschutzverglasung;
   und/oder
- zur Verbesserung der Haftung eines Polyacrylamid-Hydrogels an oder auf einer Brandschutzverglasung, vorzugsweise an oder auf der Oberfläche einer Scheibe, vorzugsweise einer Scheibe aus Silikatglas, einer Brandschutzverglasung.

Hinsichtlich bevorzugter Ausgestaltungen einer hier vorgenannten erfindungsgemäßen Verwendung einer vorstehend definierten Polyhydroxyverbindung gelten die für die Verwendung einer erfindungsgemäßen polymerisierbaren Zusammensetzung oder eines erfindungsgemäßen Polyacrylamid-Hydrogels, für das erfindungsgemäße Verfahren, für die erfindungsgemäße Brandschutzverglasung, für das erfindungsgemäße Polyacrylamid-Hydrogel und/oder für die erfindungsgemäße polymerisierbare Zusammensetzung vorstehend angegebenen Erläuterungen, insbesondere betreffend mögliche bevorzugte Ausführungsformen und mögliche bzw. bevorzugte Kombinationen, entsprechend (gegebenenfalls sinngemäß), und umgekehrt.

Bevorzugt ist die Verwendung einer vorstehend definierten Polyhydroxyverbindung, wobei die Polyhydroxyverbindung Glycerin umfasst oder Glycerin ist.

### Beispiele:

Die nachfolgend angegebenen Beispiele sollen die Erfindung näher erklären und beschreiben, ohne aber ihren Umfang zu beschränken.

### Beispiel 1: Herstellung einer erfindungsgemäßen polymerisierbaren Zusammensetzung

Aus den unten in Tabelle 1 angegebenen Bestandteilen wurde eine erfindungsgemäße polymerisierbare Zusammensetzung hergestellt und durch intensives mechanisches Vermischen der Bestandteile miteinander homogenisiert:

**Tabelle 1: Bestandteile einer erfindungsgemäßen polymerisierbaren Zusammensetzung**

| **Komponente** | **Bestandteil** | **Massenanteil an der Zusammensetzung [Massen-%]** |
|---|---|---|
| (A) | N-Methylolacrylamid | 5 - 7 |
| (A) | Acrylamid | 0 - 2 |
| (B) | Magnesiumchlorid (MgCl₂) | 7 - 12 |
| (B) | Natriumchlorid (NaCl) | 7 - 12 |
| (C) | N,N'-Methylenbisacrylamid | 0,01 - 0,05 |
| (C) | Formaldehyd | 0 - 0,4 |
| (D) | Ethylenglykol (Ethandiol) | 0,01 - 0,05 |
| (D) | Triethanolamin | 0,01 - 0,05 |
| (E) | Glycerin | 3 - 7 % |
| (F) | Wasser | auf 100 % |

### Beispiel 2: Herstellung einer erfindungsgemäßen Brandschutzverglasung

### Beispiel 2a: Herstellung mit fertig abgemischter polymerisierbarer Zusammensetzung

Es wurde eine Anordnung bereitgestellt von zwei transparenten Scheiben aus 5 mm starkem Einscheiben-Sicherheitsglas (ESG), welche in einem Abstand von 12 mm parallel zueinander angeordnet waren, so dass sich zwischen den beiden Scheiben ein 12 mm breiter, befüllbarer Zwischenraum (Spalt) befand.

Eine erfindungsgemäße polymerisierbare Zusammensetzung enthaltend die vorstehend in Beispiel 1, Tabelle 1, angegebenen Bestandteile (A) bis (F), wurde hergestellt und die Bestandteile wurden intensiv mechanisch miteinander vermischt. Die entstandene Mischung wurde dann auf an sich bekannte Weise teilweise entgast. Unmittelbar im Anschluss an das Vermischen der Bestandteile miteinander wurde der erfindungsgemäßen polymerisierbaren Zusammensetzung als Radikalstarter Dinatriumperoxodisulfat in für diese Zwecke üblicher Menge zugesetzt und die so erhaltene Zusammensetzung wurde in den Zwischenraum der oben beschriebenen Anordnung von zwei transparenten Scheiben bis zur beinahe vollständigen Füllung des Zwischenraums eingefüllt.

Nach erfolgter Polymerisation der erfindungsgemäßen polymerisierbaren Zusammensetzung in dem Zwischenraum der Anordnung zweier transparenter Scheiben und in Kontakt mit diesen Scheiben (bei Raumtemperatur) resultierte eine erfindungsgemäße Brandschutzverglasung.

Das vorstehend angegebene Herstellungsverfahren wurde mehrmals wiederholt, wobei die eingesetzte Menge an Glycerin in der polymerisierbaren Zusammensetzung im Bereich von 6 bis 10 Massen-%, bezogen auf die Gesamtmasse der polymerisierbaren Zusammensetzung, variiert wurde.

### Beispiel 2b: Herstellung mit fertig abgemischter Vormischung

Es wurde eine Anordnung von zwei transparenten Scheiben bereitgestellt, wie vorstehend in Beispiel 2a beschrieben.

Eine Vormischung, enthaltend (alle) die vorstehend in Beispiel 1, Tabelle 1, angegebenen Bestandteile (A) bis (D) und (F), wurde hergestellt durch mechanisches Vermischen der Bestandteile miteinander und darauffolgendes teilweises Entgasen auf an sich bekannte Weise. Anschließend wurde diese teilweise entgaste Vormischung mit Glycerin in der in Beispiel 1, Tabelle 1, angegebenen Menge (vgl. Bestandteil (E)) sowie mit Dinatriumperoxodisulfat als Radikalstarter in für diese Zwecke üblicher Menge mit Hilfe eines Füllpumpensystems intensiv mechanisch vermischt und die so erhaltene Zusammensetzung wurde ebenfalls mit Hilfe des Füllpumpensystems in den Zwischenraum der oben beschriebenen Anordnung bis zur beinahe vollständigen Füllung des Zwischenraums eingefüllt.

Nach erfolgter Polymerisation der erfindungsgemäßen polymerisierbaren Zusammensetzung in dem Zwischenraum der Anordnung zweier transparenter Scheiben und in Kontakt mit diesen Scheiben resultierte eine erfindungsgemäße Brandschutzverglasung.

### Beispiel 3: Herstellung von weiteren Brandschutzverglasungen

Entsprechend oder analog zum vorstehend beschriebenen Beispiel 2a wurden Proben weiterer Brandschutzverglasungen BSV-1 bis BSV-4 hergestellt, wobei die folgenden Parameter variiert wurden: (i) der Gehalt an Glycerin in der jeweils eingesetzten polymerisierbaren Zusammensetzung und (ii) die Gelstärke, d.h. die Breite des Zwischenraums in der Anordnung von zwei transparenten Scheiben, in welche die polymerisierbare Zusammensetzung eingefüllt wurde. Die auf diese Weise jeweils erhaltenen Brandschutzverglasungen sind unten in Tabelle 2 angegeben.

**Tabelle 2: Weitere Brandschutzverglasungen**

| **Bezeichnung** | **Gehalt an Glycerin [Massen-%]** | **Gelstärke [mm]** | **Glastyp / Glasstärke** |
|---|---|---|---|
| BSV-1 | 20 | 12 | ESG / 5 mm |
| BSV-2 | 10 | 15 | ESG / 5 mm |
| BSV-3 | 6 | 18 | ESG / 5 mm |
| BSV-4 | 6 | 12 | ESG / 5 mm |

### Beispiel 4: Durchführung und Ergebnisse von orientierenden Anhaftungsversuchen unter Nicht-Brandbedingungen an Brandschutzverglasungen

Es wurden orientierende Anhaftungsversuche von Glas bzw. Glassplittern an Polyacrylamid-Hydrogelen unter Nicht-Brandbedingungen durchgeführt. Dabei wurden Proben von Brandschutzgläsern wie unten in Tabelle 3 angegeben durch mechanische Einwirkung zerstört und anschließend durch Sicht- und manuelle Prüfung qualitativ daraufhin untersucht, ob bzw. wie stark das Glas bzw. die entstandenen Glassplitter an den zerstörten Stellen der Brandschutzverglasung anhafteten.

Die Ergebnisse dieses Versuchs sind unten in Tabelle 3 angegeben.

**Tabelle 3: Ergebnisse von Anhaftungsversuchen unter Nicht-Brandbedingungen**

| **Brandschutzverglasung** | **Beurteilung der Anhaftung von Glas am Polyacrylamid-Hydrogel** | **Kommentar** |
|---|---|---|
| BSV-1 | starke Anhaftung | Gelbestandteile blieben selbst beim Entfernen von Glasstücken am Glas selbst fest haften |
| BSV-2 | starke Anhaftung | ./. |
| BSV-3 | starke Anhaftung | ./. |
| BSV-4 | starke Anhaftung | ./. |

In weiteren Versuchen wurde auch untersucht, ob sich die Anhaftung von Glas an ein Polyacrylamid-Hydrogel bei der (mechanischen) Zerstörung einer Brandschutzverglasung unter Nicht-Brandbedingungen durch Erhöhung des Anteils von Zuschlagstoffen (insbesondere Salze einwertiger, zweiwertiger und/oder dreiwertiger Metallionen, Komponente (B)) um bis zu 25 % des Polyacrylamid-Hydrogels verbessern lässt. Als Ergebnis dieser weiteren Versuche wurde festgestellt, dass sich Anhaftung von Glas an ein Polyacrylamid-Hydrogel bei der (mechanischen) Zerstörung einer Brandschutzverglasung unter Nicht-Brandbedingungen durch Erhöhung des Anteils an vorgenannten Zuschlagstoffen des Polyacrylamid-Hydrogels nicht verbessern ließ, sondern dass sich diese Anhaftung dadurch im Gegenteil sogar verschlechterte.

### Beispiel 5: Anhaftungsversuch unter Nicht-Brandbedinqunqen an einer erfindungsgemäßen Brandschutzverglasung

Es wurde ein weiterer Anhaftungsversuch von Glas bzw. Glassplittern an einem Polyacrylamid-Hydrogel unter Nicht-Brandbedingungen durchgeführt, wobei eine erfindungsgemäße Brandschutzverglasung vom Typ BSV-4 (zur Herstellung siehe oben in Beispiel 3) in einem Pendelschlagversuch nach DIN EN 12600 : 2003-04 getestet wurde. Dieser Test wurde an fünf Brandschutzverglasungen vom Typ BSV-4 jeweils bei Fallhöhen von 190 mm, 450 mm und 1200 mm durchgeführt. In keinem Fall wurde ein Bruch der Brandschutzverglasung festgestellt.

Anschließend wurde an einer der wie vorstehend getesteten erfindungsgemäßen Brandschutzverglasungen in senkrechter Lagerung das Glas durch einen Anschlagdorn gebrochen, um die Anhaftung des Glases bzw. der Glassplitter am Polyacrylamid-Hydrogel zu prüfen. Dabei wurde festgestellt, dass die entstandenen kleinen Glassplitter der teilweise (mechanisch) zerstörten ESG-Verglasung ausgezeichnet am Polyacrylamid-Hydrogel hafteten.

### Beispiel 6: Durchführung und Ergebnisse von Brandversuchen an Brandschutzverglasungen

Es wurden Brandversuche durchgeführt, um die Güte der Brandschutzwirkung von erfindungsgemäßen Brandschutzverglasungen zu überprüfen sowie auch die Güte der Anhaftung von Glas bzw. Glassplittern an erfindungsgemäßen Polyacrylamid-Hydrogelen unter Brandbedingungen.

Hierzu wurden Brandschutzverglasungen des Typs BSV-1, BSV-2, BSV-3 und BSV-4 (Herstellung siehe Beispiel 3) jeweils in Anlehnung an die Normen DIN EN 1363-1:2020-05 und DIN EN 1364-1:2015-09 mit der Einheitstemperaturkurve (ETK) geprüft.

Dabei wurde jeweils auf der dem Feuer abgewandten Seite einer zu prüfenden Brandschutzverglasung entsprechend den genannten Normen Thermoelemente auf der Scheibenoberfläche angebracht. Entsprechend den Angaben in den oben bezeichneten Normen wurden die ermittelten Temperaturdaten aufgezeichnet und anschließend ausgewertet.

Die unten in Tabelle 4 angegebenen Standzeiten wurden entsprechend den bzw. angelehnt an die oben bezeichneten Normen ermittelt. Dabei wurde jeweils die Durchschnittstemperatur aus fünf Messpunkten zugrunde gelegt. Als "Standzeit" wurde dabei jeweils die Zeitdauer festgehalten, beginnend mit dem Zeitpunkt, wenn im Innenraum des Brandofens die Temperatur von 50 °C erreicht wurde, bis zum Erreichen einer auf der dem Feuer abgewandten Seite gemessenen Temperaturerhöhung um 180 K gegenüber der Temperatur auf der dem Feuer abgewandten Seite zu Beginn des Brandversuchs.

**Tabelle 4: Ergebnisse von Brandversuchen**

| **Brandschutzverglasung** | **Standzeit [min.]** | **Kommentar** |
|---|---|---|
| BSV-1 | 30 | Keine weitere Verbesserung gegenüber Brandschutzverglasung enthaltend Polyacrylamid-Hydrogel mit geringerem Glycerin-Gehalt. |
| BSV-2 | 55 | Kleiner Gelabriss nach 55 min. |
| BSV-3 | 76 | ./. |
| BSV-4 | 40 | ./. |

In weiteren Versuchen wurde ferner untersucht, ob sich die eine Erhöhung der Standzeit einer Brandschutzverglasung auch durch Erhöhung des Anteils der ein oder mehreren polymerisierbaren Monomere der polymerisierbaren Zusammensetzung (Komponente (A)) eines Polyacrylamid-Hydrogels verbessern lässt. Als Ergebnis dieser weiteren Versuche wurde festgestellt, dass sich die Standzeit einer Brandschutzverglasung durch Erhöhung des Anteils der ein oder mehreren polymerisierbaren Monomere der polymerisierbaren Zusammensetzung (Komponente (A)) eines Polyacrylamid-Hydrogels nicht verbessern ließ.

In weiteren Versuchen wurde dann zusätzlich untersucht, ob sich die Anhaftung von Glas bzw. Glassplittern an ein Polyacrylamid-Hydrogel einer Brandschutzverglasung bei Zerstörung der Brandschutzverglasung unter Brandbedingungen durch Erhöhung des Anteils von Zuschlagstoffen (insbesondere Salze einwertiger, zweiwertiger und/oder dreiwertiger Metallionen, Komponente (B)) des Polyacrylamid-Hydrogels um bis zu 25 % verbessern lässt. Als Ergebnis dieser weiteren Versuche wurde festgestellt, dass sich die Anhaftung von Glas bzw. Glassplittern an ein Polyacrylamid-Hydrogel einer Brandschutzverglasung bei Zerstörung der Brandschutzverglasung unter Brandbedingungen durch Erhöhung des Anteils an vorgenannten Zuschlagstoffen des Polyacrylamid-Hydrogels nicht verbessern ließ, sondern dass sich diese Anhaftung dadurch im Gegenteil sogar verschlechterte.

### Beispiel 7: Durchführung von UV-Stabilitätsversuchen an einer erfindungsgemäßen Brandschutzverglasung

An einer erfindungsgemäßen Brandschutzverglasung vom Typ BSV-4 (Herstellung s.o. unter Beispiel 3) wurde zur Bestimmung des Einflusses von UV-Bestrahlung auf die Brandschutzverglasung eine Bestrahlungsprüfung gemäß DIN EN 12543-4: 2011-12 (Kapitel 7.3.1, Verfahren A) durchgeführt, wobei allerdings die Dauer der Bestrahlung > 2500 Std. betrug (anstatt 2000 Std, wie in der vorgenannten Norm vorgesehen).

Nach Abschluss der Bestrahlungsprüfung wurde an der für die Prüfung eingesetzten Brandschutzverglasung keine unerwünschten Veränderungen wie Delamination, Trübung oder Blasenbildung beobachtet.

## Patentansprüche

1. Polymerisierbare Zusammensetzung zur Herstellung eines Polyacrylamid-Hydrogels, umfassend
(A) ein oder mehrere polymerisierbare Monomere ausgewählt aus der Gruppe bestehend aus
- unsubstituiertem Acrylamid,
- substituierten Acrylamiden
und
- deren Gemischen;
(B) ein oder mehrere Salze einwertiger, zweiwertiger und/oder dreiwertiger Metallionen,
(C) ein oder mehrere Vernetzungshilfsmittel,
(D) ein oder mehrere Polymerisationskatalysatoren,
(E) in einer Gesamtmenge von > 1 Massen-%, bezogen auf die Gesamtmasse der polymerisierbaren Zusammensetzung, ein oder mehrere Polyhydroxyverbindungen, die jeweils unabhängig voneinander eine Gesamtzahl von Kohlenstoffatomen im Bereich von 2 bis 6 aufweisen,
und
(F) Wasser.

2. Polymerisierbare Zusammensetzung nach Anspruch 1,
wobei
- die substituierten Acrylamide der Komponente (A) N-Methylolacrylamid umfassen oder aus N-Methylolacrylamid bestehen, oder die Komponente (A) aus N-Methylolacrylamid besteht,
und/oder
- die ein oder mehreren polymerisierbaren Monomere der Komponente (A) ausgewählt sind aus der Gruppe bestehend aus substituierten Acrylamiden und deren Gemischen,
wobei vorzugsweise das eine oder mindestens eines der mehreren polymerisierbaren Monomere der Komponente (A) N-Methylolacrylamid ist
und/oder
- die Komponente (A) in einer Gesamtmenge im Bereich von 3 bis 12 Massen-%, vorzugsweise von 4 bis 10 Massen-%, vorliegt, bezogen auf die Gesamtmasse der polymerisierbaren Zusammensetzung.

3. Polymerisierbare Zusammensetzung nach einem der vorstehenden Ansprüche,
wobei
- die ein oder mehreren Salze der Komponente (B) Salze einwertiger und/oder zweiwertiger Metallionen umfassen oder sind;
und/oder
- die ein oder mehreren Salze der Komponente (B) Salze der Alkalimetalle und/oder Erdalkalimetalle, vorzugsweise Halogensalze, besonders bevorzugt Chloride, der Alkalimetalle und/oder Erdalkalimetalle, umfassen oder sind,
wobei vorzugsweise eines, mehrere oder alle Salze der Komponente (B) ausgewählt sind aus der Gruppe bestehend aus NaCl, KCl, MgCl₂, CaCl₂ und deren Gemischen
und/oder
- die Komponente (B) in einer Gesamtmenge im Bereich von 8 bis 35 Massen-%, vorzugsweise von 10 bis 30 Massen-%, besonders bevorzugt von 15 bis 25 Massen-%, vorliegt, bezogen auf die Gesamtmasse der polymerisierbaren Zusammensetzung.

4. Polymerisierbare Zusammensetzung nach einem der vorstehenden Ansprüche,
wobei
- eines, mehrere, oder alle Vernetzungshilfsmittel der Komponente (C) ausgewählt sind aus der Gruppe bestehend aus N,N'-Methylenbisacrylamid, Formaldehyd und deren Gemischen,
wobei vorzugsweise das eine oder mindestens eines der mehreren Vernetzungshilfsmittel der Komponente (C) N,N'-Methylenbisacrylamid ist;
und/oder
- die Komponente (C) in einer Gesamtmenge im Bereich von 0,001 bis 1,0 Massen-%, vorzugsweise von 0,005 bis 0,5 Massen-%, besonders bevorzugt von 0,01 bis 0,35 Massen-%, vorliegt, bezogen auf die Gesamtmasse der polymerisierbaren Zusammensetzung.

5. Polymerisierbare Zusammensetzung nach einem der vorstehenden Ansprüche, wobei
- der eine, mehrere oder alle Polymerisationskatalysatoren der Komponente (D) ausgewählt sind aus der Gruppe bestehend aus Ethylenglykol; Diethanolamin; Triethanolamin; N,N,N',N'-Tetramethylethylendiamin und deren Gemischen,
wobei vorzugsweise die Komponente (D) ein Gemisch von Ethylenglykol und Triethanolamin umfasst oder ist;
und/oder
- die Komponente (D) in einer Gesamtmenge im Bereich von 0,009 bis 1,5 Massen-%, vorzugsweise von 0,01 bis 1 Massen-%, besonders bevorzugt von 0,015 bis 0,5 Massen-%, vorliegt, bezogen auf die Gesamtmasse der polymerisierbaren Zusammensetzung.

6. Polymerisierbare Zusammensetzung nach einem der vorstehenden Ansprüche, wobei
- die ein oder mehreren Polyhydroxyverbindungen der Komponente (E) ein oder mehrere Polyhydroxyverbindungen umfassen oder sind, die jeweils unabhängig voneinander eine Gesamtzahl von Kohlenstoffatomen im Bereich von 3 bis 6, aufweisen und/oder jeweils unabhängig voneinander eine Gesamtzahl von Hydroxygruppen im Bereich von 2 bis 6 aufweisen,
wobei vorzugsweise die eine, mehrere, oder alle Polyhydroxyverbindungen der Komponente (E) ausgewählt sind aus der Gruppe bestehend aus Propylenglykol, Diethylenglykol, Triethylenglykol, Mannit, Sorbit, Xylit, Glucose, Glycerin und deren Gemischen,
wobei besonders bevorzugt die oder mindestens eine der ein oder mehreren Polyhydroxyverbindungen der Komponente (E) Glycerin ist und ganz besonders bevorzugt die Komponente (E) Glycerin ist;
und/oder
- die Komponente (E), vorzugsweise Glycerin, in einer Gesamtmenge im Bereich von > 1 bis ≤ 12 Massen-%, vorzugsweise von ≥ 1,5 bis ≤ 11 Massen-%, besonders bevorzugt von ≥ 2 bis ≤ 7,5 Massen-%, vorliegt, bezogen auf die Gesamtmasse der polymerisierbaren Zusammensetzung.

7. Polymerisierbare Zusammensetzung nach einem der vorstehenden Ansprüche,
wobei
- die Komponente (F), Wasser, in der polymerisierbaren Zusammensetzung in einer zur Erreichung von 100 Massen-% der polymerisierbaren Zusammensetzung erforderlichen Gesamtmenge vorliegt;
und/oder
- die polymerisierbare Zusammensetzung einen pH-Wert im Bereich von 5 bis 9, vorzugsweise im Bereich von 5,5 bis 8,5 besonders bevorzugt im Bereich von 6 bis 8, aufweist.

8. Polyacrylamid-Hydrogel, hergestellt oder herstellbar durch Polymerisation der polymerisierbaren Anteile einer polymerisierbaren Zusammensetzung nach einem der Ansprüche 1 bis 7.

9. Brandschutzverglasung, umfassend
- eine Anordnung von mindestens zwei, wenigstens teilweise für sichtbares Licht transparenten, Scheiben, welche in einem Abstand voneinander angeordnet sind, wobei die Anordnung mindestens einen zwischen jeweils zwei Scheiben liegenden Zwischenraum aufweist
und
- in dem mindestens einen Zwischenraum eine erfindungsgemäße polymerisierbare Zusammensetzung eine polymersierbare Zusammensetzung nach einem der Ansprüche 1 bis 7 oder ein Polyacrylamid-Hydrogel nach Anspruch 8.

10. Verfahren zur Herstellung einer Brandschutzverglasung, umfassend die Schritte
V1) eine Anordnung von mindestens zwei, wenigstens teilweise für sichtbares Licht transparenten, Scheiben, welche in einem Abstand voneinander angeordnet sind, wobei die Anordnung mindestens einen, zwischen jeweils zwei Scheiben liegenden, Zwischenraum aufweist,
V2) Bereitstellen oder Herstellen einer polymerisierbaren Zusammensetzung nach einem der Ansprüche 1 bis 7,
V3) wenigstens teilweises Befüllen mindestens eines zwischen jeweils zwei Scheiben der in Schritt V1) bereitgestellten oder hergestellten Anordnung liegenden Zwischenraums mit der in Schritt V2) bereitgestellten oder hergestellten polymerisierbaren Zusammensetzung
und
V4) Polymerisieren oder polymerisieren lassen der polymerisierbaren Anteile der in Schritt V3) angegebenen polymerisierbaren Zusammensetzung in dem mindestens einen, zwischen jeweils zwei Scheiben liegenden, Zwischenraum der Anordnung.

11. Verfahren nach Anspruch 10, wobei der polymerisierbaren Zusammensetzung, vorzugsweise nach Schritt V3) und/oder vor oder während Schritt V4), zusätzlich ein Radikalstarter hinzugefügt wird,
vorzugsweise ein Radikalstarter ausgewählt aus der Gruppe bestehend aus
- einer Peroxid-haltigen Verbindung, vorzugsweise ausgewählt aus der Gruppe bestehend aus Dibenzoylperoxid, einem Salz der Peroxodischwefelsäure und deren Gemischen;
- einer Azogruppen-haltigen Verbindung, vorzugsweise Azobisisobutyronitril und
- Riboflavin.

12. Verwendung einer polymerisierbaren Zusammensetzung nach einem der Ansprüche 1 bis 7 oder eines Polyacrylamid-Hydrogels nach Anspruch 8 als Brandschutzmittel für eine Brandschutzverglasung und/oder bei der Herstellung einer Brandschutzverglasung.

13. Verwendung einer Polyhydroxyverbindung wie definiert in einem der Ansprüche 1 oder 6
- als Zusatz zu einer polymerisierbaren Zusammensetzung zur Herstellung eines Polyacrylamid-Hydrogels und/oder zu einem Polyacrylamid-Hydrogel, vorzugsweise zu einem aus der polymerisierbaren Zusammensetzung hergestellten oder herstellbaren Polyacrylamid-Hydrogel,
vorzugsweise zur Verbesserung der Haftung des Polyacrylamid-Hydrogels an einer Scheibe einer Brandschutzverglasung;
und/oder
- zur Verbesserung der Haftung eines Polyacrylamid-Hydrogels an oder auf einer Brandschutzverglasung, vorzugsweise an oder auf der Oberfläche einer Scheibe, vorzugsweise einer Scheibe aus Silikatglas, einer Brandschutzverglasung.

14. Verwendung nach Anspruch 13, wobei die Polyhydroxyverbindung Glycerin umfasst oder Glycerin ist.
